# EUROPEAN PATENT APPLICATION

(11) **EP 3 501 347 A1**
(43) Date of publication of application: **26.06.2019**
(21) Application number: 17210205.5
(22) Date of filing: 22.12.2017
(51) Int. Cl.: A47J 31/40

(54) **BEVERAGE DISPENSER WITH A PLURALITY OF DISSOLUTION CHAMBERS**

(71) Applicant: Nestec S.A., 1800 Vevey (CH)
(72) Inventor: DUBIEF, Flavien, 1424 CHAMPAGNE (CH); SCORRANO, Lucio, 1400 Yverdon-les-Bains (CH); BAUDET, Larry, 1473 Font (CH); CHEVALLEY, Samuel, 1400 Yverdon-les-Bains (CH)
(74) Representative: Ducreux, Marie

(57) **Abstract**

The invention concerns a beverage preparation apparatus (10) comprising a main frame (1) supporting the functional components of the apparatus, part of said components comprising :
- a diluent supply system (4),
- at least two containers (2), said containers being configured for storing soluble beverage ingredients,
- at least two dissolution chambers (3) configured for preparing a beverage from a dose of soluble beverage ingredient and a dose of diluent, each dissolution chamber comprising :
• at last one diluent inlet (31a, 31b) designed to removably cooperate with the diluent supply system,
• one ingredient inlet (30) designed to receive the dose of soluble beverage ingredient,
• one beverage dispensing outlet (32),

wherein the apparatus comprises a sub-frame (5), said sub-frame being configured for holding all the dissolution chambers (2) and, said sub-frame being removably attached to the main frame (1).

## Description

### Field of the invention

The present invention relates to beverage dispensers preparing beverages from a soluble beverage ingredient and in which a dose of said ingredient is mixed with a liquid in a mixing chamber.

### Background of the invention

In the field of beverage preparation apparatus, the biggest apparatus enable the preparation of different types of beverages depending on the selection made by the consumer. For example, such apparatus enable alternatively the preparation of coffee, milk, chocolate or tea and mixtures of said beverages, usually mixtures of milk with coffee, chocolate or tea.
In order to provide this large choice of different beverages, the apparatus comprises several containers sorting separately different beverage ingredients such as coffee, tea, milk and chocolate soluble powders and several dissolution chambers dedicated to the preparation of the different beverages.
The internal parts of the apparatus must be regularly cleaned in order to avoid the growth of bacteria due to residues of beverages in the machine and clogging. Cleaning operation usually concerns the following parts of the dispenser:
- each dissolution chamber must be thoroughly cleaned. Each chamber must be disconnected and dismantled during this operation.
- when all the chambers are disconnected from the apparatus, the internal parts of the machine are accessible and must be cleaned too.
The cleaning operation of the dissolution chambers is long because these parts must be dismantled, then cleaned and then reassembled. The cleaning operation of the internal parts is difficult because some parts are hardly accessible.
This operation takes time and it must done by people that have been trained for the disassembling and the reassembling to avoid errors and further failure in the beverages production. Usually this cleaning is made by an operator dedicated to the maintenance of the beverages production machines.
Now there is need for decreasing the time for the cleaning operation to limit the period of time during which the dispenser is not operable. There is also a need for having this operation made by any non-trained person so that it is not necessary to ask a specific operator to come and clean the machine. The cleaning should be made by any person briefly trained on the cleaning operations. This cleaning operation must also be so short that he can be made more often depending on the nature of the food ingredients.

There is a need for improving the cleaning operation of beverage preparation apparatus.

It would be advantageous to enable the operator to prepare ready-to-use assemblies of several beverage dissolution chamber.

It would be advantageous to enable the operator to rapidly customise the beverage offer of the apparatus at the step of maintenance of the apparatus.

### Summary of the invention

In a first aspect of the invention, there is provided a beverage preparation apparatus comprising a main frame supporting the functional components of the apparatus. A part of said components comprises :
- a diluent supply system,
- at least two containers, said container being configured for storing soluble beverage ingredients,
- at least two dissolution chambers configured for preparing a beverage from a dose of soluble beverage ingredient and a dose of diluent, each dissolution chamber comprising :
   - at last one diluent inlet designed to removably cooperate with the diluent supply system,
   - one ingredient inlet designed to receive the dose of soluble beverage ingredient,
   - one beverage dispensing outlet.
In addition, the apparatus comprises a sub-frame. This sub-frame is configured for holding all the dissolution chambers and this sub-frame is removably attached to the main frame.

The beverage dispenser of the present invention comprises a main frame in which the different functional elements for preparing the beverages are positioned.

In particular, the main frame supports the diluent supply system providing the diluent to prepare the beverages. The diluent can be any suitable liquid adapted for dissolving a soluble beverage ingredient. A preferred diluent is water either hot or cold. Generally the diluent supply system of the apparatus comprises at least a diluent tank or diluent supply (such as tap water), a diluent pump, a diluent heater and/or cooler and valves for actuating the diluent delivery. The system can also comprise a selection valve for delivering diluent at either hot or cold temperature.

The main frame supports at least two containers, said container being configured for storing soluble beverage ingredients. Usually each container comprises a storing tank and an ingredient outlet. Usually the outlet is positioned at the bottom of the tank.

Usually, the apparatus comprises at least one soluble beverage ingredient dosing device, preferably one dosing device per container. The dosing device delivers the dosed ingredient to the dissolution chamber.
When the ingredient is a powder, the dosing device is preferably a rotatable volumetric dosing member. The devices for dosing can be comprised in the list of a dosing screw, a dosing auger or perforated discs. Depending on the type of container the dosing device can be integrated inside the container or provided at the outlet of the container. According to the preferred embodiment the dosing device is placed inside the container and positioned at the bottom of the container. It is preferably a spring or screw auger. Such augers displace a volume of powder from the container to the powder outlet. This sub-assembly composed of the container and the dosing device is usually identified as a canister in current beverage dispensers.
When the ingredient is a concentrate, the dosing device is preferably a peristaltic pump cooperating with a flexible tube filled with the concentrate.

The main frame supports at least two dissolution chambers configured for preparing a beverage from a dose of soluble beverage ingredient and a dose of diluent.
Each dissolution chamber comprises :
- at least one diluent inlet designed to removably cooperate with the diluent supply system of the apparatus. The removable cooperation enables the removal of the chamber from the apparatus in order to clean it.
- one ingredient inlet designed to receive the dose of soluble beverage ingredient. Preferably each chamber cooperates with one dedicated container and receives a dose of ingredient therefrom. Yet in a variant, one chamber can cooperate with two dedicated containers.
- one beverage dispensing outlet. Usually, the dispensing outlet is positioned at the bottom of the chamber.
The dissolution chamber is usually designed so as to make an efficient contact of the soluble beverage ingredient and the diluent and improve the dissolution of the ingredient to produce the beverage.
Preferably, the dissolution chamber can comprise at least one diluent inlet configured for introducing the diluent in the form of a jet inside the chamber. The chamber is preferably configured so that a whirlpool of liquid is created in the chamber and the jet of diluent hits said whirlpool. Such a dissolution chamber is described in WO 2008/071613. According to the preferred embodiment said dissolution chamber comprises one diluent inlet positioned close to the bottom of the chamber. In an alternative embodiment said chamber comprises an additional diluent inlet positioned close to the top. Diluent introduced through the higher inlet is usually used to rinse the chamber after a beverage preparation or to prepare big sized beverages.
Preferably, the chamber is devoid of whipper because whipper require more time for cleaning : indeed, a whipper is an additional piece of material to be cleaned, and whipper requires a connection to a motor, which complicates the dismantling of the chamber.
Usually the dissolution chamber is positioned under the outlet of the container so that the ingredient can be dispensed from a container in the chamber by gravity fall.
Generally the top of the dissolution chamber is opened so that powder can freely flow inside by gravity fall. By opened it is meant that the top of the chamber is not covered e.g. by a lid.

In addition, the apparatus comprises a sub-frame. This sub-frame is supported by the main frame and is configured for holding all the dissolution chambers.
The sub-frame is removably attached to the main frame.
Accordingly, when the sub-frame is removed from the main frame of the apparatus, all the chambers are simultaneously removed from the apparatus. In one gesture, the operator removes all the chambers and gets a full and direct access to the internal parts of the apparatus hidden behind the chambers.

Preferably, the sub-frame is positioned in a receiving area of the main frame and this receiving area forms a cavity inside the apparatus. This cavity presents a front face and lateral faces, these lateral faces extending inside the apparatus back to said front face.
As a result, the receiving area defines a volume inside the apparatus for positioning and holding the sub-frame - and implicitly the chambers hold in the sub-frame - inside the apparatus.
Usually, the sub-frame and the receiving area comprise cooperating guiding means in order to enable a better handling of the sub-frame during the withdrawal from or the introduction in the main frame. The sub-frame can be correctly introduced and positioned inside the receiving area
Preferably, the apparatus comprises a locking device in order to firmly attached the sub-frame to the receiving area during the operation of the apparatus. The locking device can be a lever.
Preferably the sub-frame is a drawer and the drawer is able to slide horizontally in the receiving area of the main frame.
Preferably the front face of the receiving area is essentially flat and smooth. By essentially flat it is meant that the front face does not comprise parts jutting out and creating edges. Yet, the front face can comprise holes, in particular holes communicating with the diluent supply system. The global shape of this front face can be curved, the curvature presenting a radius of at least 40 mm.
Such front faces enable an extremely fast and easy cleaning of this surface for the operator for example by simply wiping with a cloth.

According to the preferred embodiment, for each dissolution chamber, the at least one diluent inlet comprises a conduit extending outside the chamber, said conduit presenting a length such that the conduit extends outside the external surface of the sub-frame when the chamber is hold in the sub-frame, and
wherein the front face of the receiving area comprises holes communicating with the diluent supply system, and
wherein the conduit of each chamber fits in one corresponding hole in the front face of the receiving area when the sub-frame is positioned in the receiving area.
Accordingly, since the front face comprises only holes to connect the diluent inlets of the chamber to the liquid supply system, the surface of the receiving area remains essentially flat and easy to clean.

Preferably the sub-frame can comprise sub-areas, each of these sub-areas being configured for holding one dissolution chamber and for orienting the conduit of the at least one diluent inlet of said chamber so that each conduit of each dissolution chamber is able to enter a corresponding hole in the surface of the receiving area.
Consequently, the connection of several chambers to the apparatus can be made in one easy gesture only.
Preferably, the conduits are oriented perpendicularly to the back face of the sub-frame. This embodiment makes connection easy, in particular when the sub-frame is a drawer.

According to one mode, the chambers are removable from the sub-frame. Consequently, once the sub-frame has been removed from the apparatus, it becomes easy to separate each chamber from the sub-frame. The operator is able to operate on a table or one side of a sink. Inconvenient handling inside the apparatus is not necessary any longer.
Preferably the sub-frame comprises sub-areas, each of these sub-areas being configured for receiving one dissolution chamber and for orienting the conduit of the at least one diluent inlet of said chamber.
Preferably, for all the chambers, the conduit of the at least one diluent inlet is a positioned at the same place at the outside of the chamber and oriented in the same direction.
Each sub-area is configured for orienting the conduit of the at least one diluent inlet of the chamber. The orientation of the conduit is defined in order to enable this conduit to easily fit inside the corresponding hole of the receiving area in the apparatus so as to provide connection with the liquid supply system. Preferably, the sub-area is configured for orienting the conduit perpendicularly to the back face of the sub-frame. With that aim, each of the sub-areas of the sub-frame can comprise a longitudinal slot to hold the conduit.
In one embodiment, each sub-areas presents a top opening, through which each chamber can slide. In that embodiment, preferably the chambers present a cylindrical external aspect

According to one second mode, the at least two dissolution chambers can be attached in the sub-frame in a non-dismountable manner.
Preferably, the at least two dissolution chambers and the sub-frame are made of one single piece of material. The sub-frame can be injection molded.
In that mode, the operator does not need to dismount the chambers from the sub-frame for cleaning, the whole sub-frame can be cleaned in the same operation, for example in a dishwasher. With that embodiment, the operations of dismantling the chambers from the sub-frame and re-assembling them after cleaning do not happen saving time for the operator.
A set of different sub-frames can be provided so that the operator is able to customise the beverage proposed in the beverage preparation apparatus. For example, one sub-frame can comprise two chambers both designed for preparing coffee in dispensing coffees in different drinking receptacles and another sub-frame can comprise one chamber designed for preparing coffee and one chamber for preparing foamed milk in the same drinking receptacle.

Whatever the mode, at least two dissolution chambers can differ by their internal configurations. This is the case when one chamber is configured for preparing coffee and another chamber is configured for preparing milk. Such chambers can differ by :
- their internal volume, and usually their internal diameter if the chambers are cylindrical, and/or
- the design of their internal surface, and/or
- the orientation of the diluent inlet inside the chamber. Actually, the jet of water provided by the diluent inlet can be inclined differently inside the chamber depending on the required dissolution effect, and/or
- the cross section and/or the shape of the beverage dispensing outlet.

According to one embodiment of the apparatus :
- the dispensing outlet of each chamber communicates with a flexible tube, and
- each flexible tube is part of the sub-frame, and
- for each flexible tube, the apparatus comprises a corresponding pinching actuator able to slide in and out of the surface of the receiving area.
Consequently, the outlets of the chambers are closed by pinching valve. This type of valve is commanded by a pinching actuator that can be hidden behind the surface of the receiving area when the sub-frame is dismantled. The surface remains flat and easy to clean.

In a second aspect of the invention, there is provided a system of :
- a beverage preparation apparatus, said apparatus comprising a main frame supporting the functional components of the apparatus, part of said components comprising :
   - a diluent supply system,
   - at least two containers, said containers being configured for storing soluble beverage ingredients,
   - a receiving area configured for removably positioning a sub-frame under the containers, and
   - at least two sub-frames, said sub-frame being configured for holding a combination of at least two dissolution chambers said chambers being configured for preparing a beverage from a dose of soluble beverage ingredient and a dose of diluent, each dissolution chamber comprising :
      - at last one diluent inlet designed to removably cooperate with the diluent supply system,
      - one ingredient inlet designed to receive the dose of soluble beverage ingredient,
      - one beverage dispensing outlet,
each chamber presenting an internal design configured to dissolve one dedicated type of soluble beverage ingredient.
This system presents the advantage of providing several ready-to-use sub-frames for the same apparatus. Accordingly, one sub-frame can be introduced and used in the apparatus while another one can be quietly cleaned in the meantime. These sub-frames can present the same combination of chambers.

Alternatively or in addition to, the system can comprise a multiplicity of sub-frames, the sub-frames differing by the combination of chambers hold inside. The combinations of chambers from one sub-frame to another can differ by the beverage offer they provide. For example, one sub-frame can comprise two chambers designed for preparing coffee and dispensing coffees in different drinking receptacles and another sub-frame can comprise one chamber designed for preparing coffee and one chamber for preparing foamed milk in the same drinking receptacle. These sub-frames can be used at different hours of the day depending on the demand of the consumers : the demand for black coffees is stronger in the morning whereas the demand for cappuccinos is stronger after the lunch. The two sub-frames enables the operator to change easily from one offer to the other in the course of the day, to clean the dirty chambers and to get them ready to use for the next day.

Preferably the combination of at least two dissolution chambers and the sub-frame are made of one single piece of material.

The beverage ingredient used in the apparatus of the present invention can be a soluble beverage powder or a beverage concentrate.
Such a soluble beverage powder can be instant coffee powder, chocolate powder, milk powder, instant tea powder, a fruit powder, a soup powder.
Such a beverage concentrate can be a coffee concentrate, milk concentrate, tea concentrate, a syrup.

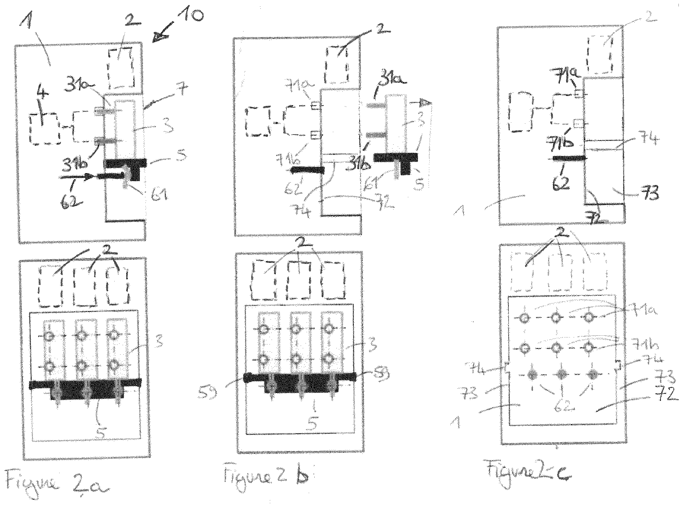

In the present application the terms "internal", "external", "back", "front", "bottom", "lateral" and "top" are used to describe the relational positioning of features of the invention. These terms should be understood to refer to the components of the apparatus in their normal orientation when positioned in the apparatus for the production of a beverage as shown in the figures 2a-c, 3a-b, 6 and 7a-b.

The above aspects of the invention may be combined in any suitable combination. Moreover, various features herein may be combined with one or more of the above aspects to provide combinations other than those specifically illustrated and described. Further objects and advantageous features of the invention will be apparent from the claims, from the detailed description, and annexed drawings.

### Brief description of the drawings

The characteristics and advantages of the invention will be better understood in relation to the following figures :
- Figures 1a and 1b illustrate a beverage preparation apparatus according to the state of the art during the cleaning operation
- Figures 2a-2c are a schematic view of an apparatus according to the invention in different operational states,
- Figures 3a-3b are perspective views of the front and back sides of an embodiment of the sub-frame holding three chambers,
- Figure 4 illustrates the sub-frame of Figures 3a-b without the chambers,
- Figures 5a-b are side and bottom views of one chamber.
- Figure 6 is a perspective view of a sub-frame according to the second mode of the invention,
- Figures 7a and 7b are side views of a set of two sub-frames according to the second mode of the invention.

### Detailed description of the drawings

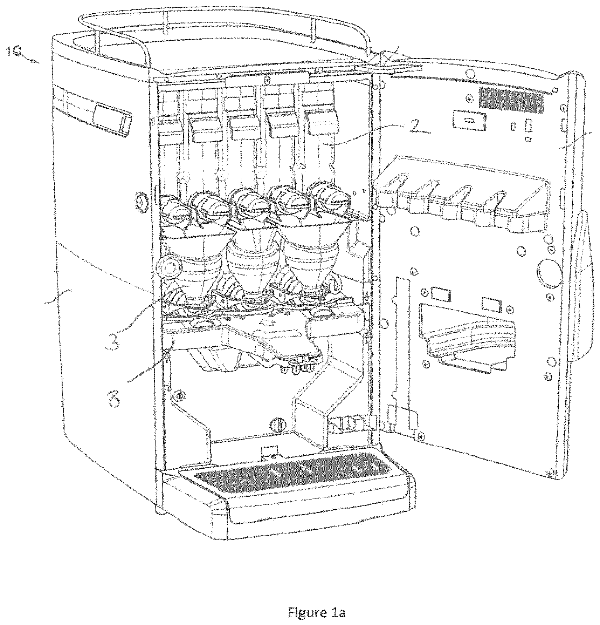

**Figure** 1a illustrates a beverage preparation apparatus 1 of the state of the art, the front door being opened to enable an operator to start cleaning.
Internally, the frame of the apparatus supports five containers 2 storing difference soluble beverage ingredients The outlets 21 of these containers dispense doses of ingredients in three dissolution chambers 3 positioned downwardly. These chambers prepare beverages and the beverages are dispensed through beverage tubes hold in a manifold 8. The beverages are dispensed in a cup that can be positioned on a drip tray at the bottom of the apparatus.
The cleaning of such an apparatus requires that each chamber 3 is removed from the apparatus one after the other and that each chamber is further dismantled. After dismantling, cleaning and reassembling, each chamber must positioned back at the right original place in the apparatus.
In another step, the manifold 8 is dismantled too, cleaned, reassembled and positioned back in the apparatus.

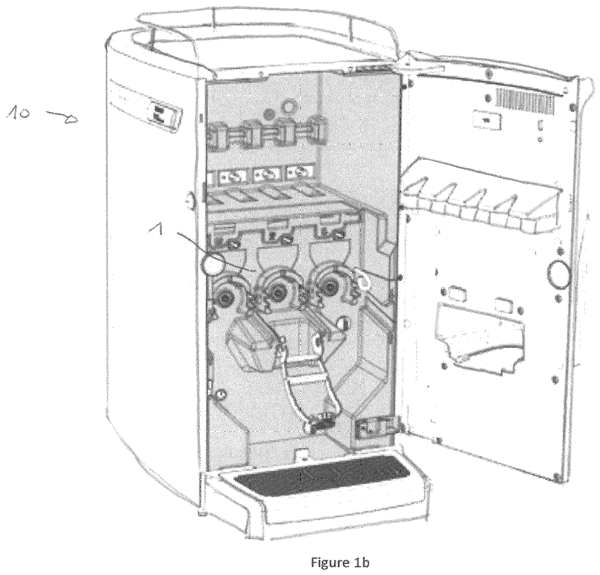

**Figure 1b** illustrates the apparatus at the step where the chambers 3, the manifold x and even the containers 2 have been removed so that the operator is about cleaning the internal parts of the frame of the apparatus. It can be noticed that the surfaces of the frame present many hidden recesses and edges making he cleaning tedious.

**Figures 2a-2c** are a schematic views of a beverage preparation apparatus according to the invention. In each Figure, the dispenser is represented according to a vertical cross section side view and a front view.
In **Figure 2a**, the apparatus 10 is in its operational state ready to prepare beverages. It comprises three containers 2 storing soluble beverage ingredients. These ingredients are of different natures such as coffee, milk, decaffeinated coffee or not. Preferably these containers comprise or cooperate with dosing devices to dose and dispense the stored ingredient downwardly in three corresponding dissolution chambers 3. The doses of ingredient are introduced through the tops of the chambers. Each chamber 3 is designed for mixing the dose of beverage ingredient with a diluent to prepare the beverage. The diluent is introduced in each chamber 3 through a top diluent inlet 31a and a bottom diluent inlet 31b. Yet, according to the preferred embodiment, the chamber comprises the bottom diluent inlet 31b only. Each diluent inlet is connected to the diluent supply system 4 hold inside the frame 1 of the apparatus. Each chamber 3 comprises a beverage outlet and each beverage outlet is connected to a flexible tube 61 that is part of a pinching valve as described hereunder.
The apparatus comprises three pinching actuators 62 able to pinch the flexible tube as illustrated in Figure 2a. These actuators 62 are hold in the main frame 1 of the apparatus.
The apparatus comprises a main frame 1 that holds at least the containers 2 and the diluent supply system 4.
**Figure 2b** illustrates the apparatus in the state where the operator begins the cleaning operation. The three chambers are hold by a sub-frame 5. This sub-frame is attached to the main frame 1 in Figure 2a, but can be removed from the main frame as illustrated in Figure 2b. After opening the front door of the apparatus and eventually unlocked the sub-frame, the sub-frame is pulled horizontally away from the frame and, in one movement, the three chambers are disconnected from the diluent system supply and removed from the apparatus. The part of the frame in which the sub-frame is positioned is a receiving area 7 forming a cavity inside the apparatus. This cavity presents a front face 72 and lateral faces 73. The front face 75 comprises holes 71a, 71b communicating with the diluent supply system 4 and establishing fluid connection with the different diluent inlets of the chambers, respectively 31a, 31b. According to the preferred embodiment, the front face comprises only three holes 71b. In this illustrated embodiment, the sub-frame 5 is a drawer sliding horizontally inside the receiving area 7. The lateral faces 72 comprise slots 74 in which lateral guiding rails 59 of the drawer can slide.
Once the sub-frame has been removed, and as illustrated in **Figure 2c**, this receiving area 7 is fully accessible and easy to clean. In particular the front face 72 is essentially flat since it comprises small holes 71b, and eventually the holes 71a, and the pinching actuators 62 are retracted behind the surface of the receiving area.
In the preferred embodiment, the beverage outlets of the chambers are not connected to a flexible tube that is part of a pinching valve and the apparatus does not comprise pinching actuators. As a result the front face 72 comprises only the holes 71a, 71b, and even more preferably only 71b, establishing connection with the diluent supply system 4.

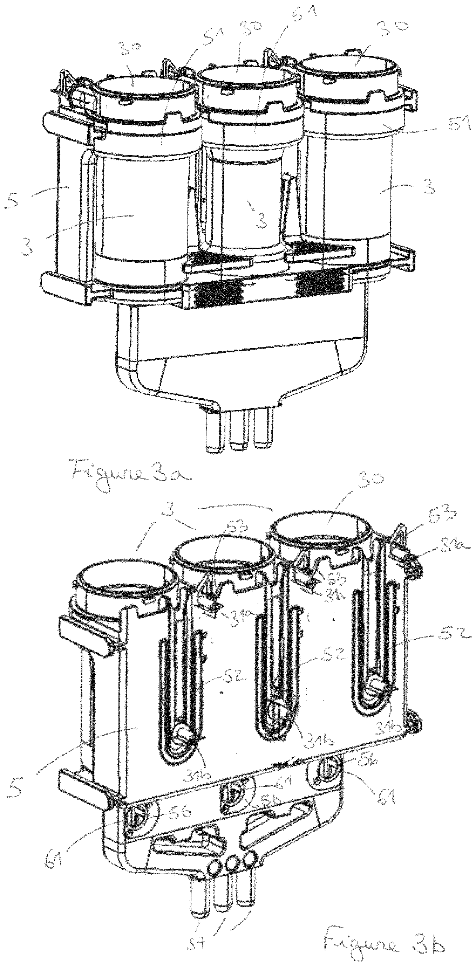

**Figures 3a-3b** illustrate an embodiment of the sub-frame 5 holding three chambers 3 according to the first mode. The sub-frame comprises three sub-areas 51 in which one chamber can be positioned. In particular the chambers can be slid from above in three rings guiding the movement of the operator. On the back side, the sub-frame presents three slots 52. Each slot is designed to receive the bottom diluent inlet 31b of one chamber. These slots enable the correct orientation of the diluent inlet in the sub-frame, preferably in order to orientate the diluent inlets 31b perpendicularly to the back side of the sub-frame. Consequently, when the operator positions the sub-frame in the receiving area of the frame, the movement of the operator is a horizontal sliding movement enabling easy connection of the diluent inlets with the holes in the surface of the receiving area.
The sub-frame comprises three indentations 53 enabling too the other top diluent inlets 31a to nest in the sub-frame.
The chambers are well immobilised and oriented inside the sub-frame.
The back side of the sub-frame comprises three holes 56 enabling the introduction and removal of the pinching actuators to pinch the flexible tubes hold in the sub-frame. Downstream the flexible tubes 61, conduits drive the beverages to the final dispensing outlets 57. In the illustrated embodiment, the three outlets dispense their beverages in the same area, for example in the same cup. Alternatively, the three outlets can be designed to dispense their beverages in different areas, for example in three different cups.

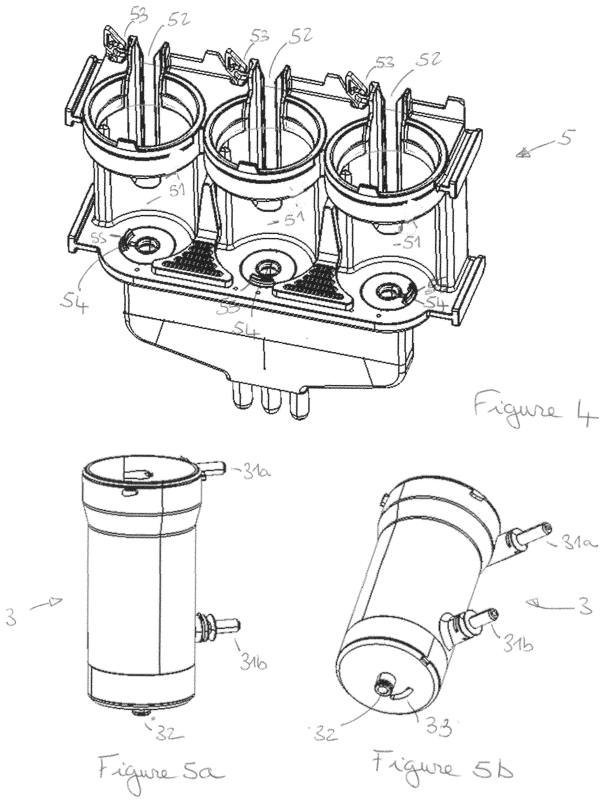

**Figure 4** illustrates the sub-frame of Figures 3a-b the chambers being removed therefrom. The bottom part of the sub-frame comprises three conduits 54 designed to cooperate with the beverage outlet 33 (see Figures 5a-b) of the chambers and leading to the flexible tubes of the pinching valves.

**Figures 5a****-b** are side and bottom views of one chamber 3. At its bottom, the chamber can comprise a slot 33 designed and positioned to fit with a corresponding bump 55 at the bottom part of one sub-area 51 of the sub-frame. This couple of slot and bump enables the positioning of the chambers always in the same sub-area 51 in the sub-frame. This embodiment is useful if the chambers present different internal configurations configured for specific natures of ingredients. It is important that the correct chamber is positioned under the correct ingredient containers and that after cleaning the chamber is positioned again at the same sub-area and under the same ingredient container. In place of the couple of slot and bump, the same code colour can be used for the chamber and its sub-area.

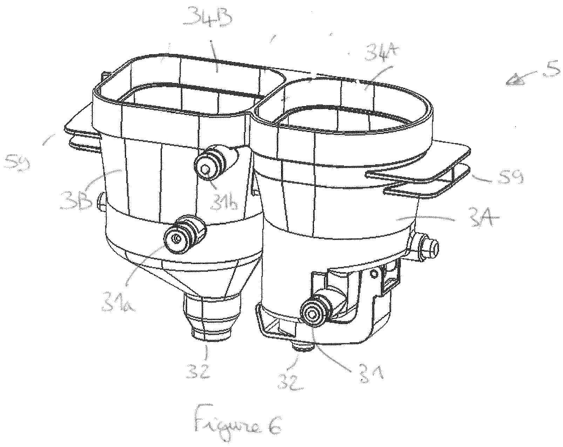

**Figure 6** is a perspective view of a sub-frame according to the second mode of the invention.
The sub-frame 5 holds two dissolution chambers 3A, 3B and the assembly of the sub-frame 5 and the two chambers 3A, 3B is made of one single piece of material. In the middle of the sub-frame, the two chambers are attached one to the other by the external surfaces of their lateral side walls 34A, 34B. On the lateral side of the sub-frame 5, guiding rails 59 are moulded on the external surface of their lateral side walls 34A, 34B. Both chambers present different designs, in particular to dissolve different ingredients, such as instant coffee and milk powder. In the apparatus (not illustrated), the front face of the receiving area comprises holes positioned to enable the connection of the three diluent inlets 31, 31a and 31b with the diluent supply. When the chambers must be cleaned, the operator can remove simultaneously both chambers and simultaneously rinse them and then put them in a dish washer. Eventually, a second identical sub-frame can be provided to enable the operator to have the apparatus operational immediately.
The sub-frame is illustrated with two different chambers. Yet in a variant, the two chambers can present the same design and can be configured for dissolving the same ingredient.

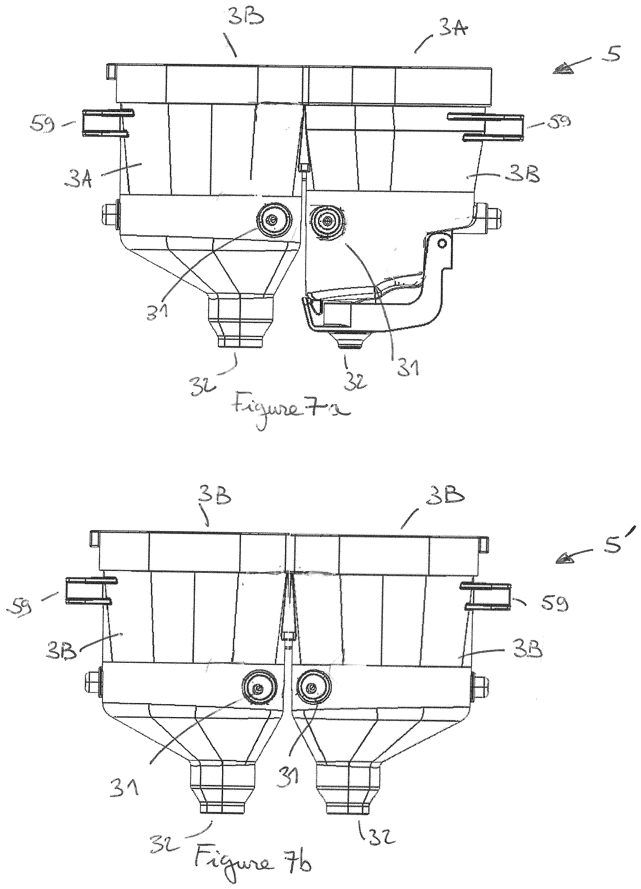

**Figures 7a and 7b** are side views of a set of two sub-frames 5, 5' similar to the sub-frame described in Figure 6 except that the diluent inlets 31 of the chambers are always positioned at the same position of the chamber. In the sub-frame 5, the two chambers 3A, 3B present different designs, in particular to dissolve different ingredients, such as instant coffee and milk powder, whereas in sub-frame 5', the two chambers 3B, 3B present the same design and are configured to dissolve the same ingredient such as milk powder. Yet in both sub-frames 5, 5', whatever the design of the chambers 3A, 3B, the diluents inlets 31 are always positioned at the same position of the sub-frame.
As a result, both sub-frames 5, 5' can be alternatively used in the same apparatus wherein the front face of the receiving area comprises holes positioned to receive the diluent inlets 31 of the chambers. With this set of different sub-frames 5, 5', the operator is able to customise the beverages proposed in the beverage preparation apparatus and when the sub-frame 5 is used, the sub-frame 5' can be washed.
In a variant, the designs of the chambers 3A, 3B can also simply differ by the position of the beverage outlets 32. In Figures 7a and 7b, both outlets 32 are designed to dispense the beverages at the same place, meaning that only one receptacle can be positioned under these outlets. In the variant, the outlets 32 can be designed to dispense the beverages at different places, meaning that one receptacle can be positioned under each outlet and that two beverages can be dispensed simultaneously.

Although the invention has been described with reference to the above illustrated embodiments, it will be appreciated that the invention as claimed is not limited in any way by these illustrated embodiments.
Variations and modifications may be made without departing from the scope of the invention as defined in the claims. Furthermore, where known equivalents exist to specific features, such equivalents are incorporated as if specifically referred in this specification.
As used in this specification, the words "comprises", "comprising", and similar words, are not to be interpreted in an exclusive or exhaustive sense. In other words, they are intended to mean "including, but not limited to".

### List of references in the drawings :

- beverage preparation apparatus: 10
- frame: 1
- container: 2
- chamber: 3, 3A, 3B
- ingredient inlet: 30
- diluent inlet: 31, 31a, 31b
- conduit: 311a, 311b
- beverage outlet: 32
- recess: 33
- lateral side wall: 34A, 34B
- diluent supply system: 4
- sub-frame: 5, 5'
- sub-areas: 51
- slot: 52
- indentation: 53
- outlet: 54
- bump: 55
- holes: 56
- final dispensing outlets: 57
- back side: 58
- guiding rail: 59
- flexible tube: 61
- pinching actuator: 62
- receiving area: 7
- holes: 71a, 71b
- front face: 72
- lateral face: 73
- slot: 74
- manifold: 8

## Claims

1. Beverage preparation apparatus (10) comprising a main frame (1) supporting the functional components of the apparatus, part of said components comprising :
- a diluent supply system (4),
- at least two containers (2), said containers being configured for storing soluble beverage ingredients,
- at least two dissolution chambers (3) configured for preparing a beverage from a dose of soluble beverage ingredient and a dose of diluent, each dissolution chamber comprising :
. at last one diluent inlet (31a, 31b) designed to removably cooperate with the diluent supply system,
. one ingredient inlet (30) designed to receive the dose of soluble beverage ingredient,
. one beverage dispensing outlet (32),
wherein the apparatus comprises a sub-frame (5), said sub-frame being configured for holding all the dissolution chambers (2) and, said sub-frame being removably attached to the main frame (1).

2. Beverage preparation apparatus according to Claim 1, wherein the sub-frame (5) is positioned in a receiving area (7) of the main frame, said receiving area (7) forming a cavity inside the apparatus, said cavity presenting a front face (72) and lateral faces (73), said lateral faces extending inside the apparatus back to said front face.

3. Beverage preparation apparatus according to the precedent claim, wherein the sub-frame (5) is a drawer and the drawer is able to slide horizontally in the receiving area (7) of the main frame.

4. Beverage preparation apparatus according to Claim 2 or 3, wherein the front face (72) of the receiving area is essentially flat and smooth.

5. Beverage preparation apparatus according to any one of Claims 2 to 4, wherein, for each dissolution chamber (3), the at least one diluent inlet (31a, 31b) comprises a conduit (311a, 311b) extending outside the chamber, said conduit presenting a length such that the conduit extends outside the external surface of the sub-frame when the chamber is hold in the sub-frame, and
wherein the front face (72) of the cavity of the receiving area comprises holes (71a, 71b) communicating with the diluent supply system (4), and
wherein the conduit (311a, 311b) of each chamber fits in one corresponding hole (71a, 71b) in the surface of the receiving area when the sub-frame is positioned in the receiving area.

6. Beverage preparation apparatus according to the precedent claim, wherein the sub-frame (5) comprises sub-areas (51), each of these sub-areas being configured for holding one dissolution chamber (3) and for orienting the conduit (71a, 71b) of the at least one diluent inlet of said chamber so that each conduit of each dissolution chamber is able to enter a corresponding hole (71a, 71b) in the surface of the receiving area.

7. Beverage preparation apparatus according to any one of the precedent claims, wherein the chambers (3) are removable from the sub-frame (5).

8. Beverage preparation apparatus according to any one of Claims 6 or 7, wherein all the chambers (3) present the same external configuration.

9. Beverage preparation apparatus according to and one of Claims 5 to 8, wherein, for all the chambers (3), the conduit (71a, 71b) of the at least one diluent inlet is a positioned at the same place, and the external volume of the chamber is the same.

10. Beverage preparation apparatus according to any one of the precedent claims, wherein at least two chambers (2) differ by their internal configurations.

11. Beverage preparation apparatus according to any one of the precedent claims, wherein :
- the beverage dispensing outlet (32) of each chamber communicates with a flexible tube (61), and
- each flexible tube (61) is part of the sub-frame (5), and
- for each flexible tube, the apparatus comprises a corresponding pinching actuator (62) able to slide in and out of the surface of the receiving area.

12. Beverage preparation apparatus according to any one of Claim 1 to 3, wherein the at least two dissoluble chambers (3) are attached in the sub-frame (5) in a non-dismountable manner.

13. Beverage preparation apparatus according to the precedent claim, wherein the at least two dissoluble chambers (3) and the sub-frame (5) are made of one single piece of material.

14. System of :
- a beverage preparation apparatus (10), said apparatus comprising a main frame (1) supporting the functional components of the apparatus, part of said components comprising :
. a diluent supply system (4),
. at least two containers (2), said containers being configured for storing soluble beverage ingredients,
. a receiving area (7) configured for removably positioning a sub-frame (5) under the containers,
and
- at least two sub-frames (5), each sub-frame being configured for holding a combination of at least two dissolution chambers (3), said chambers being configured for preparing a beverage from a dose of soluble beverage ingredient and a dose of diluent, each dissolution chamber comprising :
. at last one diluent inlet (31a, 31b) designed to removably cooperate with the diluent supply system,
. one ingredient inlet (30) designed to receive a dose of soluble beverage ingredient,
. one beverage dispensing outlet (32)
each chamber presenting an internal design configured to dissolve one dedicated type of soluble beverage ingredient.

15. System according to Claim 14, wherein the system comprises a multiplicity of sub-frames, the sub-frames differing by the combination of chambers hold inside.

16. System according to Claim 14 or 15, wherein the combination of at least two dissoluble chambers (3) and the sub-frame (5) are made of one single piece of material.
